# EUROPÄISCHE PATENTSCHRIFT

(11) **EP 4 429 919 B1**
(45) Veröffentlichungstag und Bekanntmachung des Hinweises auf die Patenterteilung: **09.07.2025**
(21) Anmeldenummer: 22801416.3
(22) Anmeldetag: 11.10.2022
(51) Int. Cl.: B60Q 3/208, B60N 2/879, B60Q 1/52, B60Q 3/57, B60Q 3/74, B60Q 3/80

(54) **KRAFTFAHRZEUG**
MOTOR VEHICLE
VÉHICULE AUTOMOBILE

(30) Priorität: 09.11.2021 DE 102021005528
(43) Veröffentlichungstag der Anmeldung: 18.09.2024
(73) Patentinhaber: Mercedes-Benz Group AG, 70372 Stuttgart (DE)
(72) Erfinder: LA PLACA, Giovanni, 71636 Ludwigsburg (DE)
(74) Vertreter: Novagraaf Group
(86) Internationale Anmeldenummer: PCT/EP2022/078236
(87) Internationale Veröffentlichungsnummer: WO 2023/083543

(56) Entgegenhaltungen:
- WO-A1-2017/073250
- CN-A- 112 078 344
- DE-A1- 102006 035 522
- DE-A1- 102007 049 922
- DE-A1- 102018 201 766
- DE-A1- 102020 005 517
- DE-A1- 102020 124 649
- DE-C1- 10 226 451
- FR-A1- 3 056 801
- US-A1- 2018 086 260
- US-A1- 2022 347 976
- US-A1- 2022 402 428
- US-B1- 8 757 807
- US-B2- 10 300 849
- US-B2- 11 518 301

## Beschreibung

Die Erfindung betrifft ein Kraftfahrzeug mit einem Innenraum und einer in dem Innenraum angeordneten Projektionseinheit nach dem Oberbegriff des Anspruchs 1. Die Erfindung betrifft auch ein Verfahren zum Steuern der Projektionseinheit.

Aktuell setzen sich immer häufiger die sogenannten Ambiente-Beleuchtungen in Innenräumen der Kraftfahrzeuge durch. Die genannten Ambiente-Beleuchtungen sind üblicherweise mittels LEDs realisiert und sind im Bereich der I-Tafel, der Mittelkonsole sowie der Türbeläge installiert.

Aus DE 20 2020 106 986 U1 ist eine Interaktionsanordnung mit mehreren Projektoren für mehrere Nutzer bekannt. Dabei sind jedem Projektor ein Projektionsbereich und jedem Nutzer ein Benutzerinterface zugeordnet.

Aus DE 10 2020 124 649 A1 ist ferner eine Vorrichtung zum Erzeugen einer Volumengrafik außerhalb eines Kraftfahrzeug bekannt. Dabei weist die Vorrichtung eine Laseranordnung, mit der die Materie außerhalb dem Kraftfahrzeug anregbar ist.

Aus DE 10 2020 102 742 A1 ist des Weiteren eine Beleuchtungsvorrichtung mit Anzeigemodulen bekannt. Mit der Beleuchtungsvorrichtung sind grafische Information auf Flächenbereichen des Kraftfahrzeugs in Abhängigkeit von der Fahrgeschwindigkeit und Fahrtrichtung darstellbar.

Aus DE 10 2017 127 257 A1 ist ferner ein Flurförderzeug mit einem Fahrerschutzdach bekannt. Das Fahrerschutzdach weist eine durchsichtige Dachscheibe in Form eines transparenten Displays zur Anzeige von Informationen auf.

Aus DE 102 26 451 C1 ist zudem bekannt, mittels einer Projektionseinheit eine dem Innenraum zugewandte Dachfläche auszuleuchten.

FR 3 056 801 A1 offenbart eine Warnvorrichtung für ein autonomes Kraftfahrzeug, die eine Lichtvorrichtung und eine autonome Fahrvorrichtung umfasst. Die Lichtvorrichtung umfasst ein Steuermodul und von dem Steuermodul gesteuerte Lichtmittel. Das Steuermodul aktiviert die Beleuchtungsmittel auf Befehl der autonomen Fahrvorrichtung, um die Aufmerksamkeit des Fahrers auf die Bedienelemente des Fahrzeugs zu lenken, wenn eine Situation eintritt, die nicht von der autonomen Fahrvorrichtung vorgesehen ist.

US 2018/086260 A1 offenbart eine Vorrichtung zur Steuerung der Innenbeleuchtung eines Kraftfahrzeuginnenraums mit mindestens einer Lichtquelle, einem Projektionsträger und einem Steuermodul. Das Steuermodul ist in der Lage, den Projektionsträger so zu konfigurieren, dass er mindestens ein von der Lichtquelle ausgestrahltes Bild empfangen kann.

Die Aufgabe der Erfindung ist es, für ein Kraftfahrzeug der gattungsgemäßen Art eine verbesserte oder zumindest alternative Ausführungsform anzugeben, bei der insbesondere die aus dem Stand der Technik bekannten Nachteile überwunden werden. Die Aufgabe der Erfindung ist es auch, eine verbesserte Projektionseinheit für das Kraftfahrzeug und ein Verfahren zum Steuern der Projektionseinheit bereitzustellen.

Diese Aufgabe wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Projektionseinheit des Kraftfahrzeugs auch zum Ausleuchten des Kraftfahrzeugs in einer Notfallsituation zu nutzen und das Kraftfahrzeug dadurch für Rettungsdienst sichtbar zu machen.

Ein gattungsgemäßes Kraftfahrzeug weist einen Innenraum und eine in dem Innenraum angeordnete Projektionseinheit auf. Die Projektionseinheit weist dabei eine Projektionsfläche und wenigstens einen Projektor auf. Die Projektionseinheit ist dabei derart ausgebildet, dass in einer Normalsituation ein Lichtsignal mittels des wenigstens einen Projektors auf einen lichtreflektierenden Beleuchtungsbereich der Projektionsfläche projizierbar ist. Der Beleuchtungsbereich der Projektionsfläche ist dabei zumindest bereichsweise durch eine dem Innenraum zugewandte lichtreflektierende Dachfläche des Kraftfahrzeugs abgebildet. Erfindungsgemäß weist die Projektionsfläche einen nach außen durchsichtigen Glasbereich auf. Zudem ist die Projektionseinheit derart ausgebildet, dass in einer Notfallsituation das Lichtsignal mittels des wenigstens einen Projektors durch den Glasbereich hindurch nach außen projizierbar ist und das Kraftfahrzeug von außen erkennbar ist. Es versteht sich dabei, dass das Lichtsignal in der Notfallsituation sich von dem Lichtsignal in der Normalsituation unterscheiden kann.

In der Normalsituation kann die Projektionseinheit eine Ambiente-Beleuchtung oder eine Voll-Beleuchtung des Kraftfahrzeugs durch Projizieren des Lichtsignals auf den Beleuchtungsbereich der Projektionsfläche übernehmen. Der Beleuchtungsbereich ist lichtreflektierend, so dass das Lichtsignal sich von dem wenigstens einen Projektor zu dem Beleuchtungsbereich ausbreitet und dann von dem Beleuchtungsbereich in den Innenraum reflektiert wird. Dadurch ist der Innenraum indirekt beleuchtet und eine Blendwirkung kann verhindert werden. Der Beleuchtungsbereich kann beispielweise durch die gesamte Dachfläche abgebildet sein und dadurch der gesamte Innenraum gleichmäßig ausgeleuchtet werden. Um die lichtreflektierende Wirkung des Beleuchtungsbereichs zu verstärken, kann die Dachfläche mit einer lichtreflektierenden Beschichtung beschichtet sein.

Der Glasbereich ist dagegen lichtdurchlässig, so dass das Lichtsignal durch den Glasbereich nach außen hindurch austreten kann. In der Notfallsituation kann die Projektionseinheit also das Lichtsignal durch den Glasbereich der Projektionsfläche hindurch nach außen ausstrahlen und dadurch das Kraftfahrzeug für einen Rettungsdienst - wie beispielweise ein Rettungshubschrauber - erkennbar machen. Dadurch kann die Projektionseinheit nicht nur die Ambiente-Beleuchtung oder eine Voll-Beleuchtung des Kraftfahrzeugs, sondern auch die Sicherheitsfunktion in dem Kraftfahrzeug übernehmen.

Bei einer vorteilhaften Ausgestaltung des Kraftfahrzeugs kann vorgesehen sein, dass die Dachfläche zumindest bereichsweise durch einen durchsichtigen Panoramabereich und eine den Panoramabereich schließende Abschattungseinrichtung geformt ist. Alternativ kann vorgesehen sein, dass die Dachfläche anstatt des durchsichtigen Panoramabereichs ein durchsichtiges Glasschiebedach aufweist. Der Panoramabereich oder das Glasschiebedach der Dachfläche bildet dann den Glasbereich der Projektionsfläche und die Abschattungseinrichtung bildet dann zumindest bereichsweise den Beleuchtungsbereich der Projektionsfläche ab. Dazu kann die Abschattungseinrichtung dem Innenraum zugewandt auch lichtreflektierend ausgebildet sein. In der Notfallsituation ist dann die Abschattungseinrichtung automatisch geöffnet und das Lichtsignal ist mittels des wenigstens einen Projektors durch den Panoramabereich oder das Glasschiebedach hindurch nach außen projizierbar. Mit anderen Worten wird in der Notfallsituation die Abschattungseinrichtung automatisch eingefahren und der Glasbereich - also der Panoramabereich oder das Glasschiebedach - geöffnet. Dann wird das Lichtsignal durch den Glasbereich hindurch nach außen gesendet. Dadurch kann das in den Unfall oder in Not geratene Kraftfahrzeug von außen dank des Lichtsignals besser erkannt werden.

Alternativ oder zusätzlich kann vorgesehen sein, dass das Kraftfahrzeug wenigstens eine durchsichtige Seitenscheibe aufweist. Die Seitenscheibe des Kraftfahrzeugs bildet dann den Glasbereich der Projektionsfläche ab. In der Notfallsituation ist dann das Lichtsignal mittels des wenigstens einen Projektors durch die Seitenscheibe hindurch nach außen projizierbar. In der Notfallsituation kann dadurch das Kraftfahrzeug auch seitlich beleuchtet und dadurch auch seitlich besser erkannt werden. Zum Ausleuchten der Seitenscheibe kann der wenigstens eine Projektor bewegbar - beispielweise schwenkbar und/oder verschiebbar - in dem Kraftfahrzeug angeordnet bzw. montiert bzw. befestigt sein. Insbesondere kann der wenigstens eine Projektor elektromotorisch bewegbar sein. In der Notfallsituation kann dann der wenigstens eine Projektor zu der Seitenscheibe des Kraftfahrzeugs bewegt werden und das Lichtsignal durch die Seitenscheibe hindurch nach außen gesendet werden.

Bei einer vorteilhaften Ausführungsform des Kraftfahrzeugs kann die Projektionseinheit eine Sensoreinheit mit wenigstens einem Pre-Crash-Sensor und/oder wenigstens einem Crash-Sensor aufweisen. Durch die Sensoreinheit kann die Projektionseinheit die Notfallsituation erkennen und das Senden bzw. Ausstrahlen des Lichtsignals durch den Glasbereich hindurch starten. Alternativ oder zusätzlich kann die Projektionseinheit einen Notruf-Schalter zum manuellen Kennzeichnen der Notfallsituation aufweisen. Mit dem Notruf-Schalter kann ein Insasse des Kraftfahrzeugs die Notfallsituation der Projektionseinheit zu einem beliebigen Zeitpunkt manuell mitteilen. Insbesondere kann der Notruf-Schalter aktiviert werden, wenn das Kraftfahrzeug sich in der von einem Crash abweichenden Notfallsituation befindet.

Bei einer vorteilhaften Ausführungsform ist vorgesehen, dass das Kraftfahrzeug wenigstens einen Vordersitz aufweist. Der Vordersitz kann vorteilhafterweise ein Integralsitz sein. Der jeweilige Projektor ist dann in dem jeweiligen Vordersitz verbaut. Dabei ist der jeweilige Projektor vorzugsweise in einer Kopfstütze oder im Bereich einer Kopfstütze des jeweiligen Vordersitzes verbaut. Insbesondere kann das Kraftfahrzeug zwei Vordersitze und die Projektionseinheit zwei Projektoren aufweisen.

Das Lichtsignal in der Normalsituation kann durch ein Ausleuchten des Beleuchtungsbereichs der Projektionsfläche mit einem statischen Farblicht und/oder mit einem statischen Weißlicht gebildet sein. Insbesondere kann dabei der komplette Beleuchtungsbereich - und insbesondere die komplette Dachfläche - vollständig ausgeleuchtet sein. Das Lichtsignal kann dabei dimmbar bzw. in seiner Intensität anpassbar sein. Zudem kann die Farbe des Lichtsignals einstellbar bzw. wechselbar sein. Alternativ kann das Lichtsignal in der Normalsituation durch Projizieren wenigstens eines Musters und/oder wenigstens einer Grafik auf den Beleuchtungsbereich der Projektionsfläche gebildet sein. Denkbar ist es auch, dass das Lichtsignal in der Normalsituation durch Projizieren wenigstens einer Animation und/oder wenigstens eines zeitlich wechselnden Musters und/oder wenigstens einer zeitlich wechselnden Grafik auf den Beleuchtungsbereich der Projektionsfläche gebildet ist. In der Normalsituation kann also die Projektionseinheit beliebige Muster oder Grafiken an den Beleuchtungsbereich bzw. an die Dachfläche des Kraftfahrzeugs projizieren. Das Lichtsignal kann hier auch mit Gaming an einem gekoppelten Smartphone oder mit einem integrierten Bildschirm bzw. System kombinierbar sein.

In der Notfallsituation ist das Lichtsignal erfindungsgemäß durch Projizieren wenigstens eines statischen oder zeitlich wechselnden Musters und/oder wenigstens einer statischen oder zeitlich wechselnden Grafik auf den Glasbereich der Projektionsfläche gebildet. Wie oben bereits erläutert ist, kann das Lichtsignal in der Notfallsituation von dem Lichtsignal in der Normalsituation abweichen.

Die Erfindung betrifft auch ein Verfahren zum Steuern der Projektionseinheit des oben beschriebenen Kraftfahrzeugs. Dabei wird in einer Notfallsituation ein Lichtsignal mittels wenigstens eines Projektors der Projektionseinheit durch einen Glasbereich einer Projektionsfläche der Projektionseinheit nach außen projiziert und das Kraftfahrzeug wird dadurch von außen erkennbar. Eine Projektionseinheit für das oben beschriebene Kraftfahrzeug kann dabei eine Projektionsfläche und wenigstens einen Projektor aufweisen. Um Wiederholungen zu vermeiden, wird in Bezug auf die Ausgestaltung der Projektionseinheit und des Kraftfahrzeugs auf die obigen Ausführungen verwiesen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch:
- Fig. 1: Ansicht eines erfindungsgemäßen Kraftfahrzeugs in einer Normalsituation,
- Fig. 2: Ansicht eines erfindungsgemäßen Kraftfahrzeugs in einer Notfallsituation.

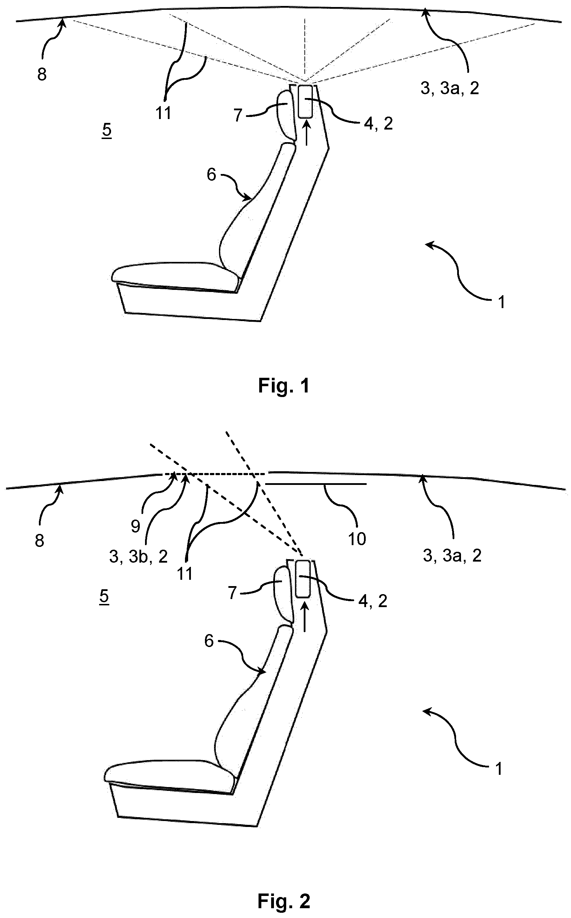

Fig. 1 zeigt ein erfindungsgemäßes Kraftfahrzeug 1 in einer Normalsituation. Fig. 2 zeigt das erfindungsgemäße Kraftfahrzeug 1 in einer Notfallsituation. Das Kraftfahrzeug 1 weist dabei eine Projektionseinheit 2 mit einer Projektionsfläche 3 und mit einem Projektor 4 auf. Zudem weist das Kraftfahrzeug 1 einen Innenraum 5 auf, wobei in dem Innenraum 5 ein Vordersitz 6 mit einer Kopfstütze 7 und eine Dachfläche 8 angeordnet sind. Die Dachfläche 8 ist dabei - wie in Fig. 2 erkennbar ist - bereichsweise durch einen durchsichtigen Glasschiebedach 9 und eine Abschattungseinrichtung 10 zum Verschließen des Glasschiebedachs 9 geformt. Der Projektor 4 der Projektionseinheit 2 ist in die Kopfstütze 7 des Vordersitzes 6 elektromotorisch verstellbar - wie mit dem Pfeil angedeutet ist - eingebaut.

Die Projektionsfläche 3 der Projektionseinheit 2 ist dabei durch einen Beleuchtungsbereich 3a und einen Glasbereich 3b abgebildet. Der Beleuchtungsbereich 3a ist lichtreflektierend und durch die Dachfläche 3 und insbesondere durch die Abschattungseinrichtung 10 gebildet. Um die lichtreflektierende Wirkung des Beleuchtungsbereichs 3a zu verstärken, kann die Dachfläche 3 und die Abschattungseinrichtung 10 mit einer lichtreflektierenden Beschichtung beschichtet sein. Der Glasbereich 3b ist durchsichtig und ist hier durch das Glasschiebedach 9 - hier schematisch mit gepunkteten Linien angedeutet - abgebildet.

Bezugnehmend auf Fig. 1 projiziert die Projektionseinheit 2 in einer Normalsituation mittels des Projektors 4 ein Lichtsignal 11 - hier schematisch mit durchbrochenen Linien angedeutet - auf den Beleuchtungsbereich 3a. Da der Beleuchtungsbereich 3a lichtreflektierend ist, wird das Lichtsignal 11 zurückreflektiert und der Innenraum 5 ohne Blendwirkung ausgeleuchtet. Das Lichtsignal 11 kann dabei durch ein statisches Farblicht und/oder ein statisches Weißlicht gebildet sein und den Innenraum 5 gleichmäßig ausleuchten. Alternativ kann das Lichtsignal 11 durch Projizieren wenigstens eines statischen oder zeitlich wechselnden Musters und/oder wenigstens einer statischen oder zeitlich wechselnden Grafik gebildet sein.

Bezugnehmend auf Fig. 2 ist in einer Notfallsituation die Abschattungseinrichtung 10 automatisch geöffnet und die Projektionseinheit 2 projiziert das Lichtsignal 11 - hier schematisch mit durchbrochenen Linien angedeutet - auf den Glasbereich 3b. Da der Glasbereich 3b durchsichtig ist, ist das Lichtsignal 11 von außen sichtbar. Dadurch ist das Kraftfahrzeug 1 von außen von einem Rettungsdienst - wie beispielweise einem Rettungshubschrauber - gut erkennbar. Das Lichtsignal 11 ist erfindungsgemäß durch Projizieren wenigstens eines statischen oder zeitlich wechselnden Musters und/oder wenigstens einer statischen oder zeitlich wechselnden Grafik gebildet.

## Patentansprüche

1. Kraftfahrzeug (1) mit einem Innenraum (5),
- wobei das Kraftfahrzeug (1) eine in dem Innenraum (5) angeordnete Projektionseinheit (2) mit einer Projektionsfläche (3) und wenigstens einem Projektor (4) aufweist,
- wobei die Projektionseinheit (2) derart ausgebildet ist, dass in einer Normalsituation ein Lichtsignal (11) mittels des wenigstens einen Projektors (4) auf einen lichtreflektierenden Beleuchtungsbereich (3a) der Projektionsfläche (3) projizierbar ist,
- wobei der Beleuchtungsbereich (3a) der Projektionsfläche (3) zumindest bereichsweise durch eine dem Innenraum (5) zugewandte lichtreflektierende Dachfläche (8) des Kraftfahrzeugs (1) abgebildet ist, und
- wobei die Projektionsfläche (3) einen nach außen durchsichtigen Glasbereich (3b) aufweist,
**dadurch gekennzeichnet,**
- **dass** die Projektionseinheit (2) derart ausgebildet ist, dass in einer Notfallsituation das Lichtsignal (11) mittels des wenigstens einen Projektors (4) durch den Glasbereich (3b) hindurch nach außen projizierbar ist und das Kraftfahrzeug (1) von außen erkennbar ist, und
- **dass** in der Notfallsituation das Lichtsignal (11) durch Projizieren wenigstens eines statischen oder zeitlich wechselnden Musters und/oder wenigstens einer statischen oder zeitlich wechselnden Grafik auf den Glasbereich (3b) der Projektionsfläche (3) gebildet ist.

2. Kraftfahrzeug nach Anspruch 1,
**dadurch gekennzeichnet,**
- **dass** die Dachfläche (8) zumindest bereichsweise durch einen durchsichtigen Panoramabereich oder durch ein durchsichtiges Glasschiebedach (9) und eine den Panoramabereich oder das Glasschiebedach (9) schließende Abschattungseinrichtung (10) geformt ist,
- **dass** der Panoramabereich oder das Glasschiebedach (9) der Dachfläche (8) den Glasbereich (3b) der Projektionsfläche (3) und die Abschattungseinrichtung (10) zumindest bereichsweise den Beleuchtungsbereich (3a) der Projektionsfläche (3) abbilden, und
- **dass** in der Notfallsituation die Abschattungseinrichtung (10) automatisch geöffnet ist und das Lichtsignal (11) mittels des wenigstens einen Projektors (4) durch den Panoramabereich oder das Glasschiebedach (9) hindurch nach außen projizierbar ist.

3. Kraftfahrzeug nach Anspruch 1,
**dadurch gekennzeichnet,**
- **dass** das Kraftfahrzeug (1) wenigstens eine Seitenscheibe aufweist,
- **dass** die Seitenscheibe des Kraftfahrzeugs (1) den Glasbereich (3b) der Projektionsfläche (3) abbildet, und
- **dass** in der Notfallsituation das Lichtsignal (11) mittels des wenigstens einen Projektors (4) durch die Seitenscheibe hindurch nach außen projizierbar ist.

4. Kraftfahrzeug nach Anspruch 3,
**dadurch gekennzeichnet,**
**dass** der wenigstens eine Projektor (4), vorzugsweise elektromotorisch, bewegbar in dem Kraftfahrzeug (1) angeordnet ist und in der Notfallsituation zu der Seitenscheibe des Kraftfahrzeugs (1) bewegbar ist.

5. Kraftfahrzeug nach einem der vorangehenden Ansprüche,
**dadurch gekennzeichnet,**
- **dass** die Projektionseinheit (2) eine Sensoreinheit mit wenigstens einem Pre-Crash-Sensor und/oder wenigstens einem Crash-Sensor zum Erkennen der Notfallsituation aufweist, und/oder
- **dass** die Projektionseinheit (2) einen Notruf-Schalter zum manuellen Kennzeichnen der Notfallsituation aufweist.

6. Kraftfahrzeug nach einem der vorangehenden Ansprüche,
**dadurch gekennzeichnet,**
- **dass** das Kraftfahrzeug (1) wenigstens einen Vordersitz (6), vorzugsweise einen Integralsitz aufweist, und
- **dass** der jeweilige Projektor (4) in dem jeweiligen Vordersitz (6), vorzugsweise in einer Kopfstütze (7) oder im Bereich einer Kopfstütze (7) des jeweiligen Vordersitzes (6), verbaut ist.

7. Kraftfahrzeug nach einem der vorangehenden Ansprüche,
**dadurch gekennzeichnet,**
- **dass** in der Normalsituation das Lichtsignal (11) durch ein Ausleuchten des Beleuchtungsbereichs (3a) der Projektionsfläche (3) mit einem statischen Farblicht und/oder mit einem statischen Weißlicht gebildet ist, oder
- **dass** in der Normalsituation das Lichtsignal (11) durch Projizieren wenigstens eines statischen oder zeitlich wechselnden Musters und/oder wenigstens einer statischen oder zeitlich wechselnden Grafik auf den Beleuchtungsbereich (3a) der Projektionsfläche (3) gebildet ist.

8. Verfahren zum Steuern der Projektionseinheit (2) des Kraftfahrzeugs (1) nach einem der vorangehenden Ansprüche, wobei in einer Notfallsituation ein Lichtsignal (11) mittels wenigstens eines Projektors (4) der Projektionseinheit (2) durch einen Glasbereich (3b) einer Projektionsfläche (3) der Projektionseinheit (2) nach außen projiziert wird und das Kraftfahrzeug (1) von außen erkennbar wird.

## Claims

1. Motor vehicle (1) comprising an interior (5),
- the motor vehicle (1) comprising a projection unit (2) arranged in the interior (5), which projection unit comprises a projection surface (3) and at least one projector (4),
- the projection unit (2) being designed such that in a normal situation, a light signal (11) can be projected by means of the at least one projector (4) onto a light-reflecting illumination region (3a) of the projection surface (3),
- the illumination region (3a) of the projection surface (3) being at least partially represented by a light-reflecting roof surface (8) of the motor vehicle (1) facing the interior (5), and
- the projection surface (3) comprising an outwardly transparent glass region (3b),
**characterized**
- **in that** the projection unit (2) is designed such that in an emergency situation, the light signal (11) can be projected outwards through the glass region (3b) by means of the at least one projector (4), and the motor vehicle (1) can be perceived from the outside,
- and **in that** in the emergency situation, the light signal (11) is formed by projecting at least one static or temporally changing pattern and/or at least one static or temporally changing graphic onto the glass region (3b) of the projection surface (3).

2. Motor vehicle according to claim 1,
**characterized**
- **in that** the roof surface (8) is formed, at least in part, by a transparent panoramic region or a transparent glass sliding roof (9) and a shading device (10) which closes the panoramic region or the glass sliding roof (9),
- **in that** the panoramic region or the glass sliding roof (9) of the roof surface (8) represents the glass region (3b) of the projection surface (3), and the shading device (10) at least partially represents the illumination region (3a) of the projection surface (3),
- and **in that** in the emergency situation, the shading device (10) is automatically opened and the light signal (11) can be projected outwards through the panoramic region or the glass sliding roof (9) by means of the at least one projector (4).

3. Motor vehicle according to claim 1,
**characterized**
- **in that** the motor vehicle (1) comprises at least one side window,
- **in that** the side window of the motor vehicle (1) represents the glass region (3b) of the projection surface (3),
- and **in that** in the emergency situation, the light signal (11) can be projected outwards through the side window by means of the at least one projector (4).

4. Motor vehicle according to claim 3,
**characterized in that**
the at least one, preferably electromotive, projector (4) is arranged so as to be movable in the motor vehicle (1) and, in the emergency situation, is movable to the side window of the motor vehicle (1).

5. Motor vehicle according to any of the preceding claims,
**characterized**
- **in that** the projection unit (2) comprises a sensor unit having at least one pre-crash sensor and/or at least one crash sensor for identifying the emergency situation, and/or
- **in that** the projection unit (2) comprises an emergency call switch for manually indicating the emergency situation.

6. Motor vehicle according to any of the preceding claims,
**characterized**
- **in that** the motor vehicle (1) comprises at least one front seat (6), preferably an integral seat, and
- **in that** the relevant projector (4) is built into the relevant front seat (6), preferably in a headrest (7) or in the region of a headrest (7) of the relevant front seat (6).

7. Motor vehicle according to any of the preceding claims,
**characterized**
- **in that** in the normal situation, the light signal (11) is formed by illuminating the illumination region (3a) of the projection surface (3) by using a static colored light and/or a static white light, or
- **in that** in the normal situation, the light signal (11) is formed by projecting at least one static or temporally changing pattern and/or at least one static or temporally changing graphic onto the illumination region (3a) of the projection surface (3).

8. Method for controlling the projection unit (2) of the motor vehicle (1) according to any of the preceding claims, wherein in an emergency situation, a light signal (11) is projected outwards through a glass region (3b) of a projection surface (3) of the projection unit (2) by means of at least one projector (4) of the projection unit (2), and the motor vehicle (1) becomes perceivable from the outside.

## Revendications

1. Véhicule automobile (1) comportant un habitacle (5),
- dans lequel le véhicule automobile (1) présente une unité de projection (2) disposée dans l'habitacle (5) et comportant une surface de projection (3) et au moins un projecteur (4),
- dans lequel l'unité de projection (2) est conçue de telle sorte que, dans une situation normale, un signal lumineux (11) peut être projeté au moyen de l'au moins un projecteur (4) sur une zone d'éclairage (3a) réfléchissant la lumière de la surface de projection (3),
- dans lequel la zone d'éclairage (3a) de la surface de projection (3) est formée, au moins dans certaines zones, par une surface de toit (8) du véhicule automobile (1) réfléchissant la lumière et tournée vers l'habitacle (5), et
- dans lequel la surface de projection (3) présente une zone vitrée (3b) transparente vers l'extérieur,
**caractérisé en ce**
- **que** l'unité de projection (2) est conçue de telle sorte que, dans une situation d'urgence, le signal lumineux (11) peut être projeté vers l'extérieur à travers la zone vitrée (3b) au moyen de l'au moins un projecteur (4) et que le véhicule automobile (1) est reconnaissable de l'extérieur, et
- **que,** dans la situation d'urgence, le signal lumineux (11) est formé par projection d'au moins un motif statique ou changeant dans le temps et/ou d'au moins une figure statique ou changeant dans le temps sur la zone vitrée (3b) de la surface de projection (3).

2. Véhicule automobile selon la revendication 1,
**caractérisé en ce**
- **que** la surface de toit (8) est formée, au moins dans certaines zones, par une zone panoramique transparente ou par un toit ouvrant vitré (9) transparent et par un dispositif d'occultation (10) fermant la zone panoramique ou le toit ouvrant vitré (9),
- **que** la zone panoramique ou le toit ouvrant vitré (9) de la surface de toit (8) forme la zone vitrée (3b) de la surface de projection (3) et le dispositif d'occultation (10) forme, au moins dans certaines zones, la zone d'éclairage (3a) de la surface de projection (3), et
- **que,** dans la situation d'urgence, le dispositif d'occultation (10) est automatiquement ouvert et le signal lumineux (11) peut être projeté vers l'extérieur à travers la zone panoramique ou le toit ouvrant vitré (9) au moyen de l'au moins un projecteur (4).

3. Véhicule automobile selon la revendication 1,
**caractérisé en ce**
- **que** le véhicule automobile (1) présente au moins une vitre latérale,
- **que** la vitre latérale du véhicule automobile (1) forme la zone vitrée (3b) de la surface de projection (3), et
- **que,** dans la situation d'urgence, le signal lumineux (11) peut être projeté vers l'extérieur à travers la vitre latérale au moyen de l'au moins un projecteur (4).

4. Véhicule automobile selon la revendication 3,
**caractérisé en ce**
**que** l'au moins un projecteur (4) est disposé de manière à être mobile, de préférence par moteur électrique, dans le véhicule automobile (1) et peut être déplacé vers la vitre latérale du véhicule automobile (1) dans la situation d'urgence.

5. Véhicule automobile selon l'une des revendications précédentes,
**caractérisé en ce**
- **que** l'unité de projection (2) présente une unité à capteurs comportant au moins un capteur de précollision et/ou au moins un capteur de collision pour reconnaître la situation d'urgence, et/ou
- **que** l'unité de projection (2) présente un commutateur d'appel d'urgence pour indiquer manuellement la situation d'urgence.

6. Véhicule automobile selon l'une des revendications précédentes,
**caractérisé en ce**
- **que** le véhicule automobile (1) présente au moins un siège avant (6), de préférence un siège intégral, et
- **que** le projecteur (4) respectif est monté dans le siège avant (6) respectif, de préférence dans un appui-tête (7) ou dans la zone d'un appui-tête (7) du siège avant (6) respectif.

7. Véhicule automobile selon l'une des revendications précédentes,
**caractérisé en ce**
- **que,** dans la situation normale, le signal lumineux (11) est formé par un éclairage de la zone d'éclairage (3a) de la surface de projection (3) avec une lumière colorée statique et/ou avec une lumière blanche statique, ou
- **que,** dans la situation normale, le signal lumineux (11) est formé par projection d'au moins un motif statique ou changeant dans le temps et/ou d'au moins une figure statique ou changeant dans le temps sur la zone d'éclairage (3a) de la surface de projection (3).

8. Procédé pour la commande de l'unité de projection (2) du véhicule automobile (1) selon l'une des revendications précédentes, dans lequel, dans une situation d'urgence, un signal lumineux (11) est projeté vers l'extérieur à travers une zone vitrée (3b) d'une surface de projection (3) de l'unité de projection (2) au moyen d'au moins un projecteur (4) de l'unité de projection (2) et le véhicule automobile (1) est reconnaissable de l'extérieur.
